# EUROPÄISCHE PATENTSCHRIFT

(11) **EP 3 011 169 B1**
(45) Veröffentlichungstag und Bekanntmachung des Hinweises auf die Patenterteilung: **19.02.2020**
(21) Anmeldenummer: 14732859.5
(22) Anmeldetag: 18.06.2014
(51) Int. Cl.: F03D 1/00, B66C 1/10, F03D 1/06, F03D 13/10

(54) **VERFAHREN ZUM MONTIEREN EINES WINDENERGIEANLAGEN-ROTORBLATTES SOWIE WINDENERGIEANLAGEN-ROTORBLATT**
METHOD FOR MOUNTING A WIND TURBINE ROTOR BLADE, AND WIND TURBINE ROTOR BLADE
PROCÉDÉ DE MONTAGE D'UNE PALE DE ROTOR D'ÉOLIENNE ET PALE DE ROTOR D'ÉOLIENNE

(30) Priorität: 21.06.2013 DE 102013211751
(43) Veröffentlichungstag der Anmeldung: 27.04.2016
(73) Patentinhaber: Wobben Properties GmbH, 26607 Aurich (DE)
(72) Erfinder: HOFFMANN, Alexander, 26721 Emden (DE); KNOOP, Frank, 26607 Aurich (DE); KUIPER, Gerrit, 26607 Aurich (DE)
(74) Vertreter: Eisenführ Speiser
(86) Internationale Anmeldenummer: PCT/EP2014/062880
(87) Internationale Veröffentlichungsnummer: WO 2014/202691

(56) Entgegenhaltungen:
- WO-A1-2012/034566
- WO-A2-2013/050569
- DE-A1-102007 043 426
- DE-B3-102011 076 937
- US-A1- 2012 027 561

## Beschreibung

Die vorliegende Erfindung betrifft ein Verfahren zum Montieren eines Windenergieanlagen-Rotorblattes sowie ein Windenergieanlagen-Rotorblatt.

Moderne Windenergieanlagen weisen einen Rotor mit typischerweise drei Rotorblättern auf, der durch den Wind in eine Rotationsbewegung versetzt wird. Die Rotationsbewegung des Rotors wird direkt oder indirekt an einen elektrischen Generator übertragen, der elektrische Energie erzeugt.

DE 102 25 025 A1 zeigt eine Vorrichtung zum Handhaben von Rotorblättern bei der Montage der Rotorblätter. Die Vorrichtung ist als ein Tragelement ausgestaltet, in welches das Rotorblatt eingelegt werden kann, damit das Rotorblatt dann mittels dem Tragelement montiert werden kann. Bei der Montage von Rotorblättern einer Windenergieanlage müssen ferner typischerweise Hilfsseile an dem Tragelement oder an der Windenergieanlage angeordnet sein, um das Rotorblatt gegebenenfalls bei der Montage stabilisieren oder ausrichten zu können.

In der prioritätsbegründenden deutschen Anmeldung hat das Deutsche Patent- und Markenamt die folgenden Dokumente recherchiert: DE 20 2010 003 033 U1 und DE 10 2011 084 140 A1.

Ein weiteres Beispiel aus dem Stand der Technik ist aus WO2013050569 bekannt.

Es ist eine Aufgabe der Erfindung, ein verbessertes Verfahren zur Montage von Windenergieanlagen-Rotorblättern sowie ein entsprechendes Windenergieanlagen-Rotorblatt vorzusehen.

Diese Aufgabe wird durch ein Verfahren zum Montieren von Windenergieanlagen-Rotorblättern gemäß Anspruch 1 sowie durch ein Windenergieanlagen-Rotorblatt gemäß Anspruch 4 gelöst.

Somit wird ein Verfahren zum Montieren eines Windenergieanlagen-Rotorblattes vorgesehen, welches mindestens eine Ausklinkeinheit aufweist. Ein Hebeseil wird an oder in dem Rotorblatt befestigt. Erste Enden mindestens eines Hilfsseiles werden an oder in der Ausklinkeinheit in dem Rotorblatt befestigt. Das Rotorblatt wird mittels des Hebeseiles angehoben. Das Rotorblatt wird an einem Rotor der Windenergieanlage montiert. Die Ausklinkeinheit wird betätigt, so dass die ersten Enden der Hilfsseile ausgeklinkt werden. Die Hilfsseile können entfernt werden.

Gemäß einem Aspekt der vorliegenden Erfindung können die Ausklinkeinheiten mittels Ausklinkseilen aus einem Rotorblattwurzelbereich des Rotorblattes aktiviert werden, so dass die ersten Enden der Hilfsseile ausgeklinkt werden können.

Gemäß der vorliegenden Erfindung ist mindestens ein Sicherungsseil zwischen dem Hebeseil und dem mindestens einen Hilfsseil vorgesehen, so dass die Hilfsseile nicht unkontrolliert nach unten fallen können.

Die Erfindung betrifft ebenfalls ein Windenergieanlagen-Rotorblatt mit einer Rotorblattspitze, einer Rotorblattwurzel, mindestens einer Öffnung für ein Hilfsseil und mindestens einer Ausklinkeinheit in dem Rotorblatt zur Aufnahme eines ersten Endes des Hilfsseiles. Die Ausklinkeinheit ist dazu ausgestaltet, in einer Sperrposition die ersten Enden der Hilfsseile zu halten und in einer Ausklinkposition die ersten Enden der Hilfsseile freizugeben.

Gemäß einem Aspekt der vorliegenden Erfindung sind Ausklinkseile vorgesehen, welche sich von der Ausklinkeinheit zu der Rotorblattwurzel des Rotorblattes erstrecken und zum Ausklinken der ersten Enden der Hilfsseile ausgestaltet sind.

Gemäß einem Aspekt der vorliegenden Erfindung ist eine der Ausklinkeinheiten 20%-30% der Blattlänge des Rotorblattes von der Rotorblattspitze entfernt innerhalb des Rotorblattes angeordnet.

Die Erfindung betrifft einen Gedanken, Hilfsseile innerhalb des Rotorblattes an einer Ausklinkeinheit zu befestigen, wobei die Ausklinkeinheit innerhalb des Rotorblattes z.B. mittels eines Ausklinkseiles betätigbar ist, so dass die Hilfsseile nicht mehr außen an dem Rotorblatt befestigt werden müssen. Dies ist vorteilhaft, weil es somit nicht mehr nötig ist, dass das Aufbaupersonal z.B. mittels eines Krankorbes zu dem montierten Rotorblatt hinauf gezogen werden muss, um die außen angebrachten Hilfsseile zu lösen.

Die Erfindung betrifft ebenfalls ein Windenergieanlagen-Rotorblatt mit einer Rotorblattspitze und einer Rotorblattwurzel. Innerhalb des Rotorblattes sind zwei Öffnungen für jeweils ein Hilfsseil vorgesehen. Das Rotorblatt weist ebenfalls mindestens zwei Ausklinkeinheiten auf. Ein Ende der Hilfsseile wird in der Ausklinkeinheit befestigt. Nachdem das Rotorblatt sicher an dem Rotor montiert ist, werden die Ausklinkeinheiten betätigt und die ersten Enden der Hilfsseile werden ausgeklinkt und können dann nach unten abgelassen werden.

Gemäß einem Aspekt der vorliegenden Erfindung kann jeweils ein Sicherungsseil im Bereich des ersten Endes der Hilfsseile vorgesehen sein, so dass die Hilfsseile nicht unkontrolliert nach unten fallen, wenn die jeweiligen ersten Enden der Hilfsseile aus der Ausklinkeinheit ausgeklinkt worden sind.

Gemäß einem weiteren Aspekt der vorliegenden Erfindung weisen die Ausklinkeinheiten Ausklinkseile auf, welche zu dem Rotorblattwurzelbereich des Rotorblattes geführt sind, so dass das Montagepersonal das Innere des Rotorblattes nicht betreten muss, um die Hilfsseile auszuklinken.

Weitere Ausgestaltungen der Erfindung sind Gegenstand der Unteransprüche.

Vorteil und Ausführungsbeispiel der Erfindung werden nachstehend unter Bezugnahme auf die Zeichnungen näher erläutert.
- Fig. 1: zeigt eine schematische Darstellung einer Windenergieanlage gemäß der Erfindung,
- Fig. 2: zeigt eine schematische Darstellung einer Windenergieanlage bei der Montage eines Rotorblattes gemäß einem ersten Ausführungsbeispiel, und
- Fig. 3A und 3B: zeigen jeweils eine schematische Darstellung einer Ausklinkeinheit gemäß einem zweiten Ausführungsbeispiel der Erfindung.

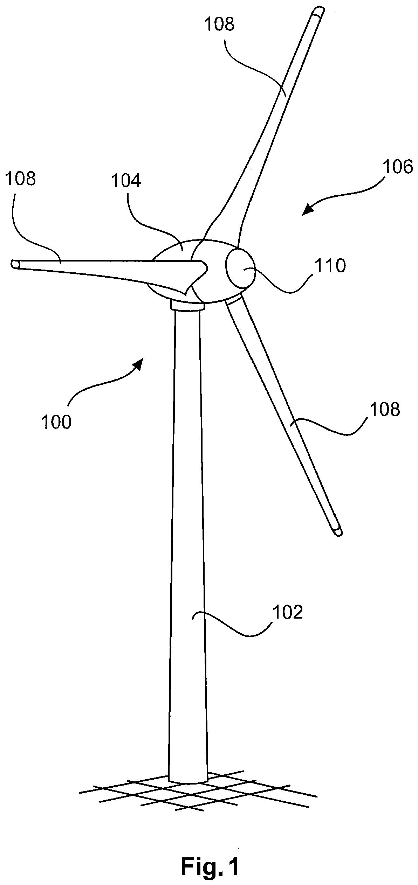

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 108b der jeweiligen Rotorblätter 108 verändert werden.

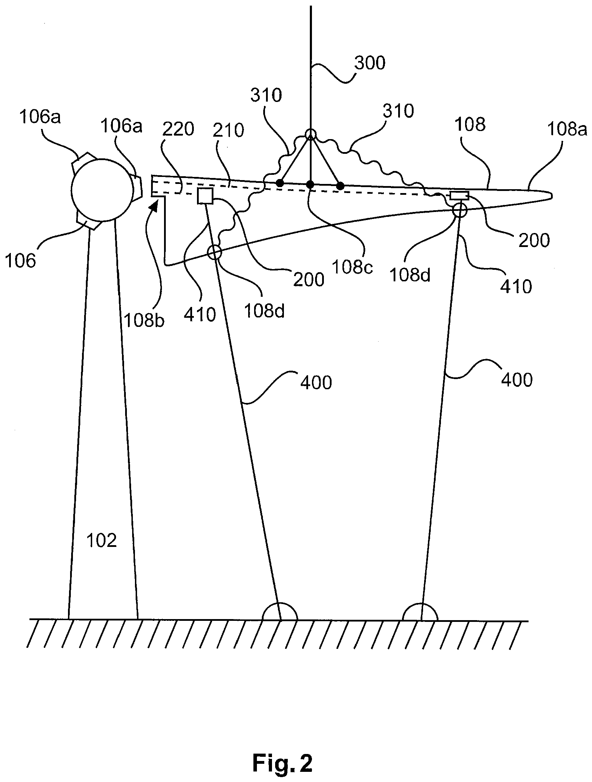

Fig. 2 zeigt eine schematische Darstellung einer Windenergieanlage bei der Montage eines Rotorblattes 108. An dem Rotor 106 können drei Blattadapter 106a vorgesehen sein, an welchem die Rotorblätter 108 montiert werden. Die Rotorblätter 108 können aber auch direkt an einer Nabe des Rotors 106 montiert werden.

Das Rotorblatt 108 kann über ein Hebeseil 300 von einem (nicht dargestellten) Kran nach oben gezogen werden. Optional können die Hebeseile 300 durch Öffnungen 108c in das Rotorblatt eingeführt und innerhalb der Rotorblätter befestigt werden. Das Rotorblatt 108 weist eine Rotorblattspitze 108a, eine Rotorblattwurzel 108b sowie eine Rotorblattlänge auf. Um das Rotorblatt 108 bei der Montage stabilisieren zu können, sind z.B. zwei Hilfsseile oder Halteseile 400 vorgesehen. Das Rotorblatt weist zwei Öffnungen 108d auf, durch welche ein erstes Ende 410 der Hilfs- oder Halteseile 400 geführt werden kann. Das erste Ende 410 der Halteseile oder Hilfsseile 400 kann dann in oder an einer Ausklinkeinheit 200 innerhalb des Rotorblattes befestigt werden. Von den Ausklinkeinheiten 200 können Ausklinkseile 210, 220 in den Bereich der Rotorblattwurzel 108b geführt werden.

Gemäß der Erfindung werden Sicherungsseile 310 zwischen dem Hebeseil 300 und den ersten Enden 410 der Hilfsseile oder Halteseile 400 befestigt. Dies ist vorteilhaft, weil somit die Hilfsseile 400 nicht ungesichert abstürzen bzw. nach unten fallen können.

Die Hilfs- oder Halteseile 400 dienen der Handhabung und/oder Sicherung des Rotorblattes bei der Montage.

Wenn das Rotorblatt 108 an dem Rotorblatt-Adaptor 106a oder an der Nabe des Rotors 106 montiert ist, dann können die Ausklinkeinheiten 200 z.B. durch Betätigen der Ausklinkseile 210, 220 aktiviert werden, so dass die ersten Enden 410 der Hilfsseile oder Halteseile 400 ausgeklinkt werden. Die ersten Enden 410 der Hilfsseile oder Halteseile 400 können dann durch die Öffnungen 108d in dem Rotorblatt nach unten abgelassen werden. Durch die Sicherungsseile 310 kann sicher gestellt werden, dass die Hilfsseile 400 nicht ungesichert nach unten fallen.

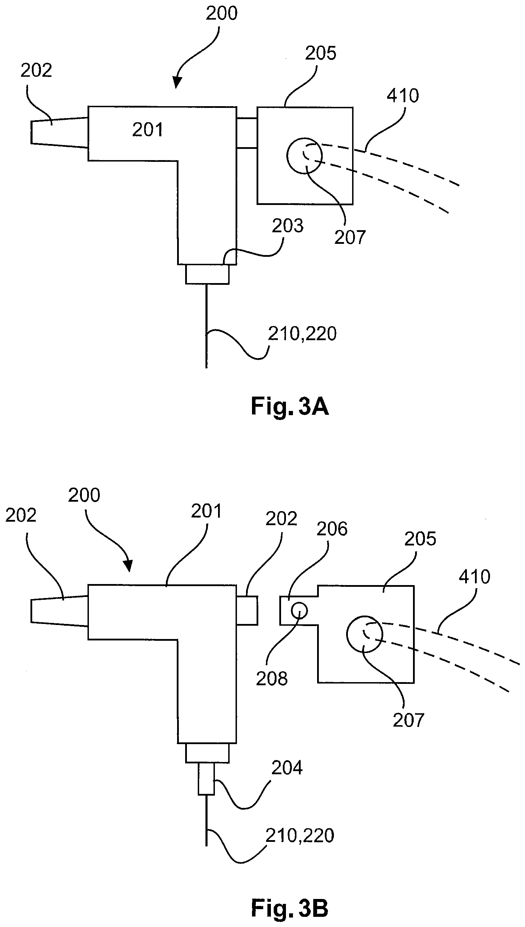

Fig. 3A und 3B zeigen jeweils eine schematische Ansicht einer Ausklinkeinheit gemäß einem zweiten Ausführungsbeispiel. Die Ausklinkeinheit 200 gemäß dem zweiten Ausführungsbeispiel kann als Ausklinkeinheit 200 gemäß dem ersten Ausführungsbeispiel verwendet werden. Die Ausklinkeinheit 200 weist einen zentralen Abschnitt 201 (der z. B. L-förmig ausgestaltet ist), einen Führungsstab 202, ein Ausklinkende 203 mit einem Sicherungsstab 204 auf, welcher z. B. an einem der Ausklinkseile 210, 220 befestigt werden kann. Die Ausklinkeinheit 200 weist ferner ein Ausklinkelement 205 mit einer Bohrung 207 auf. Die Bohrung 207 dient dazu, ein erstes Ende 410 eines Hilfsseiles 400 aufzunehmen. In einer Sperrposition wird das Ausklinkelement 205 in dem zentralen Abschnitt 201 durch den Sicherungsstab 204 gehalten. Wenn die Ausklinkseile 210, 220 betätigt werden, dann wird der Sicherungsstab 204 aus dem Ende 203 heraus gezogen und der Stab 202 sowie das Ausklinkelement 205 werden entriegelt, so dass das Ausklinkelement 205 ausgeklinkt wird. Das Ausklinkelement 205 weist ein erstes Ende 206 mit einer Bohrung 208 auf. Im gesperrten Zustand ist der Stab 204 in der Bohrung 208 befestigt und hält somit das Ausklinkelement 205. Wenn der Stab 204 durch Betätigen der Ausklinkseile 210, 220 aus der Bohrung 208 herausgezogen wird, dann wird das Ausklinkelement 205 mit dem ersten Ende 410 des Hilfsseiles 400 ausgeklinkt und das Hilfsseil 400 kann nach unten abgelassen werden oder nach unten herausfallen.

Die Ausklinkeinheit gemäß der Erfindung dient dazu, ein Ende eines Hilfsseils aufzunehmen und zu halten, bis die Ausklinkeinheit betätigt wird und das erste Ende des Hilfsseils ausgeklinkt wird. Das Betätigen der Ausklinkeinheit kann mittels der Ausklinkseile 210, 220 elektrisch, manuell (händisch) und/oder hydraulisch erfolgen.

## Patentansprüche

1. Verfahren zum Montieren eines Windenergieanlagen-Rotorblattes, welches mindestens eine Ausklinkeinheit (200) aufweist, mit den Schritten
Befestigen eines Hebeseiles (300) zum Anheben des Rotorblattes (108) an oder in dem Rotorblatt (108),
Befestigen erster Enden (410) mindestens eines Hilfsseiles (400) in oder an der Ausklinkeinheit (200) in dem Rotorblatt (108),
wobei das mindestens eine Hilfsseil (400) zur Handhabung und/oder zur Sicherung des Rotorblattes (108) während der Montage dient,
Anheben des Rotorblattes (108) mittels des Hebeseils (300),
Montieren des Rotorblattes (108) an einem Rotor (106) der Windenergieanlage,
Betätigen der Ausklinkeinheit (200), so dass die ersten Enden (410) der Hilfsseile (400) ausgeklinkt werden, und
Entfernen der Hilfsseile (400),
wobei mindestens ein Sicherungsseil (310) zwischen dem Hebeseil (300) und dem mindestens einen Hilfsseil (400) vorgesehen ist, so dass die Hilfsseile (400) nicht unkontrolliert nach unten fallen können.

2. Verfahren nach Anspruch 1, wobei
die Ausklinkeinheiten (200) mittels Ausklinkseilen (210, 220) aus einem Rotorblattwurzelbereich aktiviert werden, so dass die ersten Enden (410) der Hilfsseile oder Halteseile (400) ausgeklinkt werden.

3. Windenergieanlage, mit mindestens einem Windenergieanlagen-Rotorblatt, welches gemäß einem Verfahren zum Montieren eines Windenergieanlagen-Rotorblatts gemäß einem der Ansprüche 1 bis 2 an der Windenergieanlage montiert worden ist.

## Claims

1. Method for mounting a wind turbine rotor blade which has at least one release unit (200), having the steps:
fastening a hoisting rope (300) for lifting up the rotor blade (108) on or in the rotor blade (108),
fastening first ends (410) of at least one auxiliary rope (400) in or on the release unit (200) in the rotor blade (108),
wherein the at least one auxiliary rope (400) serves for handling and/or securing the rotor blade (108) during the mounting,
lifting up the rotor blade (108) by means of the hoisting rope (300),
mounting the rotor blade (108) on a rotor (106) of the wind turbine,
activating the release unit (200) so that the first ends (410) of the auxiliary ropes (400) are released, and
removing the auxiliary ropes (400),
wherein at least one securing rope (310) is provided between the hoisting rope (300) and the at least one auxiliary rope (400) so that the auxiliary ropes (400) are unable to fall down in an uncontrolled fashion.

2. Method according to Claim 1, wherein
the release units (200) are activated from a rotor blade root area by means of release ropes (210, 220) so that the first ends (410) of the auxiliary ropes or retaining ropes (400) are released.

3. Wind turbine with at least one wind turbine rotor blade which has been mounted on the wind turbine according to a method for mounting a wind turbine rotor blade according to one of Claims 1 to 2.

## Revendications

1. Procédé de montage d'une pale de rotor d'éolienne, laquelle présente au moins une unité de désengagement (200), comprenant les étapes
de fixation d'un câble de levage (300) destiné à lever la pale de rotor (108) sur ou dans la pale de rotor (108),
de fixation de premières extrémités (410) d'au moins un câble auxiliaire (400) dans ou sur l'unité de désengagement (200) dans la pale de rotor (108),
dans lequel l'au moins un câble auxiliaire (400) sert à manipuler et/ou à bloquer la pale de rotor (108) pendant le montage,
de levage de la pale de rotor (108) au moyen du câble de levage (300),
de montage de la pale de rotor (108) sur un rotor (106) de l'éolienne,
d'actionnement de l'unité de désengagement (200), de sorte que les premières extrémités (410) des câbles auxiliaires (400) soient désengagées, et
de retrait des câbles auxiliaires (400),
dans lequel au moins un câble de blocage (310) est prévu entre le câble de levage (300) et l'au moins un câble auxiliaire (400), de sorte que les câbles auxiliaires (400) ne puissent pas tomber vers le bas de manière incontrôlée.

2. Procédé selon la revendication 1, dans lequel
les unités de désengagement (200) sont activées au moyen de câbles de désengagement (210, 220) à partir d'une zone de pied de pale de rotor, de sorte que les premières extrémités (410) des câbles auxiliaires ou câbles de retenue (400) soient désengagées.

3. Eolienne, avec au moins une pale de rotor d'éolienne, laquelle a été montée sur l'éolienne selon un procédé de montage d'une pale de rotor d'éolienne selon l'une quelconque des revendications 1 à 2.
